# EUROPÄISCHE PATENTANMELDUNG

(11) **EP 4 603 421 A1**
(43) Veröffentlichungstag der Anmeldung: **20.08.2025**
(21) Anmeldenummer: 25157195.6
(22) Anmeldetag: 11.02.2025
(51) Int. Cl.: B65G 15/14, A22C 11/00, B65G 21/12, B65G 41/00

(54) **TRANSPORTEINRICHTUNG ZUM TRANSPORT VON PORTIONEN AUS MIT LEBENSMITTEL-MASSE BEFÜLLTEN LÄNGLICHEN HÜLLEN, BETREFFENDE TRENNVORRICHTUNG, VERFAHREN UND VERWENDUNG**

(30) Priorität: 19.02.2024 DE 102024104580
(71) Anmelder: VEMAG Maschinenbau GmbH, 27283 Verden/Aller (DE)
(72) Erfinder: Franz, Gerhard, 27299 Langwedel (DE)
(74) Vertreter: Eisenführ Speiser

(57) **Zusammenfassung**

Die Erfindung betrifft eine Transporteinrichtung (2a, 2b) zum Transport von Portionen (4) aus mit Lebensmittel-Masse befüllten länglichen Hüllen, insbesondere Wurstportionen (4) oder einer Wurstkette (5), mit einem Grundkörper (6), insbesondere einem Maschinenfundament (6), zwei Transporteinheiten (8a, 8b), wobei die Transporteinheiten (8a, 8b) jeweils über eine Lagerung (10) mit dem Grundkörper (6) verbunden sind, und wobei die Transporteinheiten (8a, 8b) jeweils einen antreibbaren Transportriemen (12a, 12b) aufweisen, wobei die Transportriemen (12a, 12b) der Transporteinheiten (8a, 8b) benachbart zueinander derart angeordnet sind, dass diese zwischen sich einen Aufnahmeraum (16) zur Aufnahme und zum Transport der Portionen (4) in eine Transportrichtung (t) definieren. Die Erfindung betrifft ferner eine betreffende Trennvorrichtung, ein Verfahren sowie eine Verwendung.

Erfindungsgemäß wird vorgeschlagen, dass wenigstens eine, insbesondere beide Lagerungen (10), als Drehlagerungen (10) ausgebildet sind, wobei die wenigstens eine Drehlagerung (10) eine Drehachse (18) aufweist, um welche die jeweilige Transporteinheit (8a, 8b) verschwenkbar gegenüber dem Grundkörper (6) gelagert ist, wobei die Transportriemen (12a, 12b) der benachbarten Transporteinheiten (8a, 8b) durch das Verschwenken um die wenigstens eine Drehachse (18) aufeinander zu und/oder voneinander weg bewegbar sind.

## Beschreibung

Die Erfindung betrifft eine Transporteinrichtung zum Transport von Portionen aus mit Lebensmittel-Masse befüllten länglichen Hüllen, insbesondere Wurstportionen oder einer Kette aus Wurstportionen, mit einem Grundkörper, insbesondere einem Maschinenfundament, zwei Transporteinheiten, wobei die Transporteinheiten jeweils über eine Lagerung mit dem Grundkörper verbunden sind, und wobei die Transporteinheiten jeweils einen antreibbaren Transportriemen aufweisen, wobei die Transportriemen der Transporteinheiten benachbart zueinander derart angeordnet sind, dass diese zwischen sich einen Aufnahmeraum zur Aufnahme und zum Transport der Portionen in einer Transportrichtung definieren.

Derartige Transporteinrichtungen sind aus dem Stand der Technik bekannt. Sie werden beispielsweise bei Trennvorrichtungen dazu verwendet, Ketten aus Wurstportionen einer Trennvorrichtung, beispielsweise einem Messer, zuzuführen und sodann die separierten Wurstportionen entsprechend abzutransportieren. Hierbei ergibt sich die Herausforderung, dass Wurstportionen, die zumeist durch Befüllung von Naturdärmen hergestellt werden, natürliche Durchmesserunterschiede aufweisen. Derartige Unterschiede werden auch als Kaliberschwankungen bezeichnet. Neben diesen natürlichen Kaliberschwankungen werden in der Praxis sogenannte Formschwankungen beobachtet, die sich aufgrund von Weiterverarbeitungsprozessen oder auch während des Transports einstellen können. Beispielsweise können Wurstportionen Abplattungen aufweisen oder eine sogenannte Kerzenform. Ferner können Wurstportionen unterschiedliche Krümmungen einnehmen, welche ebenfalls zu den Formschwankungen beitragen. Die beschriebenen Schwankungen hinsichtlich des Kalibers und der Form der zu transportierenden Wurstportionen führt dazu, dass der Transport derartiger Wurstportionen technisch anspruchsvoll ist.

Aus dem Stand der Technik vorbekannte Transporteinrichtungen sind typischerweise auf ein bestimmtes Kaliber einzustellen, sodass sich ein definierter Abstand zwischen den Transportriemen definiert wird. Aufgrund der Kaliber- und Formschwankungen kann dies dazu führen, dass während des Transportes Schlupf auftrifft, dergestalt, dass die zum Transport verwendeten Transportriemen zu wenig Kraft auf die Wurstportionen aufbringen. Die Transportriemen rutschen gewissermaßen durch. Darüber hinaus wurde in einigen Fällen ein Blockieren von Transportriemen und den betreffenden Antrieben beobachtet, bzw. ein erhöhter Kraftbedarf, wenn die Transportriemen zur Vermeidung von Schlupf zu eng für die zu transportierende Wurstportion eingestellt werden. In diesem Fall ergibt sich eine signifikante mechanische Belastung für die Antriebskomponenten und die Transportriemen selbst. Die Reibung der Transportriemen und die Belastung auf die Antriebskomponenten werden erhöht, was sich negativ auf die Lebensdauer der Komponenten auswirken kann.

Aus dem Stand der Technik ist zur Überwindung dieser Problemstellungen bekannt, konkave Rollen im Bereich der Transportbandführungen einzusetzen. Hierbei wird die Elastizität des Transportbandes oder Transportriemens dahingehend genutzt, dass eine Kaliberänderung den Transportriemen in einen konkaven Hohlraum zwischen Riemenrücken und der konkaven Rolle drückt. Allerdings hat sich gezeigt, dass der Größenbereich zum Ausgleich der Form- und Kaliberschwankungen häufig nicht ausreichend dimensioniert ist. Darüber hinaus führt das Elastizitätsverhalten derartiger Transportriemen nicht mit hinreichender Sicherheit dazu, dass Schlupf und übermäßige Belastung auf die Antriebskomponenten vermieden werden können.

Als Alternativlösung ist aus dem Stand der Technik eine federbelastete Transportbandführung bekannt, bei der die Transportriemen relativ zueinander linear geführt sind. Nachteilig hierbei wirkt sich jedoch aus, dass die Linearführungen eine große Trägheit aufweisen und aufgrund von Reibung schwergängig sind. Sie können daher Kaliber- bzw. Formschwankungen nur unzureichend ausgleichen. Darüber hinaus erhöhen die Führungen die mechanische Komplexität in unmittelbarer Nähe zu dem Trennelement der Trennvorrichtung, sodass die Vorrichtung insgesamt schlecht reinigbar ist. Da beim Transport von Wurstportionen bzw. einer Kette aus Wurstportionen und bei einem entsprechenden Trennvorgang lebensmittelhygienisch hohe Anforderungen bestehen, können Linearführungen insoweit Defizite aufweisen.

Es ist daher die Aufgabe der vorliegenden Erfindung, die aus dem Stand der Technik vorbekannten Nachteile zumindest weitgehend zu überwinden. Insbesondere war eine Transporteinrichtung anzugeben, die auch bei Kaliber- und Formschwankungen einen sicheren Transport von Wurstportionen oder einer Kette aus Wurstportionen ermöglicht und darüber hinaus für unterschiedliche Wurstkaliber verwendet werden kann und auf besonders einfache Weise reinigbar ist.

Die Aufgabe wird bei einer Transporteinrichtung der eingangs genannten Art dadurch gelöst, dass wenigstens eine, insbesondere beide Lagerungen als Drehlagerungen ausgebildet sind, wobei die wenigstens eine Drehlagerung eine Drehachse aufweist, um welche die jeweilige Transporteinheit verschwenkbar gegenüber dem Grundkörper gelagert ist, wobei die Transportriemen der benachbarten Transporteinheiten durch das Verschwenken um die wenigstens eine Drehachse aufeinander zu und/oder voneinander weg bewegbar sind.

Die Erfindung macht sich die Erkenntnis zunutze, dass durch die Ausbildung der wenigstens einen, insbesondere beiden Lagerungen, als Drehlagerung bzw. Drehlagerungen eine Möglichkeit geschaffen wird, einen symmetrischen Bewegungsablauf der Transportriemen zu und voneinander weg aus der Mitte heraus zu gewährleisten. Über eine Anpassung des Abstandes der Transportriemen zueinander mittels der Drehlagerungen kann eine gezielte Einstellung im Hinblick auf die zu erwartenden Kaliber der verarbeiteten Wurstportionen erreicht werden. Ferner kann erreicht werden, dass die Transportriemen mit einer weitgehend konstanten Kraft auf die Wurstportionen drücken. Darüber hinaus bietet eine derartige Transporteinrichtung grundlegende Hygienevorteile. Dadurch, dass die Drehachsen der Transporteinheiten beabstandet von den Transportriemen angeordnet sind, ist der Bereich unter den Transportriemen offen und für Reinigungsvorgänge gut zugänglich.

Vorzugsweise sind die Drehlagerungen der Transporteinheiten so positioniert, dass diese möglichst weit vom Transportriemen entfernt sind, sodass trotz des Umstandes, dass die Transporteinheiten um die jeweiligen Drehachsen verschwenkt werden, im Bereich der Transportriemen eine nahezu parallele Führung mit geringem Winkelfehler erreicht wird. Vorzugsweise sind die Drehlagerungen seitlich am Grundkörper angeordnet, wodurch eine Reinigbarkeit der Anordnung erleichtert wird.

Gemäß einer Ausführungsform sind die Transporteinheiten benachbart zueinander angeordnet. Vorzugsweise sind Drehachsen der benachbarten Transporteinheiten parallel zueinander angeordnet. Auf diese Weise kann vorteilhaft realisiert werden, dass die Transportriemen der Transporteinheiten durch das Verschwenken um die Drehachse aufeinander zu und/oder voneinander weg bewegbar sind.

Gemäß einer Ausführungsform ist jeder der Transporteinheiten ein Antriebsmotor zugeordnet. Vorzugsweise ist der Antriebsmotor in dem Grundkörper eingebettet. Auf diese Weise sind die Transportriemen der Transporteinheiten unabhängig voneinander antreibbar. Als Antriebsmotor kann beispielsweise ein Synchronmotor, insbesondere ein Synchronservomotor vorgesehen sein.

Gemäß einer Ausführungsform weisen die Transporteinheiten jeweils einen Armabschnitt auf, welcher den Transportriemen von der Drehlagerung beabstandet, insbesondere wobei ein Abstand zwischen der Drehachse, der Drehlagerung und einer Unterkante des zugeordneten Transportriemens dem X- bis Y-fachen der Breite des Transportriemens entspricht. Durch die Beabstandung des Transportriemens von der Drehlagerung durch den Armabschnitt wird erreicht, dass sich die Transportriemen weitestgehend parallel zueinander bewegen bzw. nur einen geringen Winkelfehler aufweisen, wenn sich die Transportriemen voneinander weg und aufeinander zu bewegen. Hierdurch wird das Transportverhalten der Transporteinrichtung insgesamt verbessert. Die zu transportierenden Wurstportionen bleiben auch dann in schlupffreiem Kontakt mit den Transportriemen, wenn diese um die jeweilige Drehachse verschwenkt werden. Das angegebene Verhältnis hat sich dabei als besonders geeignet zur Sicherstellung eines schlupffreien Transportes der Wurstportionen erwiesen.

Gemäß einer Ausführungsform sind die benachbarten Transporteinheiten über eine Kopplungseinrichtung miteinander gekoppelt. Auf diese Weise kann ein symmetrischer Bewegungsablauf aus der Mitte heraus gewährleistet werden, wobei Einstellmittel, wie Anschläge, oder Vorspannmittel, wie Federn, lediglich ein einziges Mal vorhanden sein müssen und mittels der Kopplungseinrichtung auf beide Transporteinheiten wirken können.

Gemäß einer Ausführungsform ist der Kopplungseinrichtung ein Vorspannmittel zugeordnet, welches dazu eingerichtet ist, die gekoppelten Transporteinheiten in Richtung des Aufnahmeraums vorzuspannen. Auf diese Weise werden die Transporteinheiten und damit die Transportriemen in Richtung der zu transportierenden Wurstportionen gedrückt. Der Kraftfluss verläuft dabei von der unter Federvorspannung gesetzten Transporteinheit über die Kopplungseinrichtung zur benachbarten Transporteinheit. Sobald eine Form- oder Kaliberabweichung ausgehend vom kleinsten Maß in der zu transportierenden Kette aus Wurstportionen stattfindet, hätte dies einen Aufdrücken der Transporteinheiten und damit auch der Transportriemen zur Folge. Das Vorspannmittel sorgt dafür, dass die zu transportierenden Wurstportionen mit einer definierten Kraft gegen die Transportriemen gedrückt werden. Hierdurch wird ein sicherer Kontakt zwischen den Wurstportionen und den Transportriemen hergestellt, sodass Kräfte von den Transportriemen sicher auf die Wurstportionen übertragen werden können. Schwankungen hinsichtlich der Form oder hinsichtlich des Kalibers der Wurstportionen können somit ausgeglichen werden und letztlich einen schlupffreier bzw. schlupfarmer Transport gewährleistet werden.

Gemäß einer Ausführungsform weist die Kopplungseinrichtung einen verstellbaren Anschlag auf, welcher dazu eingerichtet ist, einen Ausgangsabstand der Transportriemen zueinander einzustellen. Die Einstellung des Anschlags ermöglicht das Anpassen des Ausgangsabstandes der Transportriemen zueinander, sodass diese an das Kaliber, d. h. an den Durchmesser der zu transportierenden Wurstportionen, angepasst werden können. Vorzugsweise wird der Ausgangsabstand der Transportriemen mittels des Anschlags so gewählt, dass der Ausgangsabstand leicht untermaßig zum kleinsten erwarteten Kaliber bzw. Durchmesser der zu transportierenden Wurstportion ist.

Gemäß einer Ausführungsform sind die Transporteinheiten durch ein Verschwenken um die Drehachse voneinander weg aus einer Transportposition in einer Reinigungsposition verschwenkbar, in welcher ein Abstand zwischen den benachbarten Transportriemen vergrößert ist. In der Reinigungsposition ist der Zugang zur Unterseite der Transporteinheiten bzw. der Transportriemen nochmals verbessert.

Gemäß einer Ausführungsform ist das Maschinenfundament bzw. ist der Grundkörper hierzu pyramidenförmig ausgestaltet, sodass der Grundkörper benachbart zur Transportrichtung der Portionen seine höchste Erhebung aufweist und - quer zur Transportrichtung - seitlich abfällt nach Art einer Pyramide. Auf diese Weise wird vermieden, dass sich Partikel der Hülle oder Wurstportionen selbst im großen Umfang auf dem Maschinenfundament ablagern. Darüber hinaus wird eine Reinigbarkeit des Maschinenfundaments erleichtert.

Gemäß einer Ausführungsform ist zum Verschwenken zwischen der Reinigungsposition und der Transportposition eine Kurbel vorgesehen, die auf die Kopplungseinrichtung wirkt. Auf diese Weise kann die Zustandsänderung zwischen der Transportposition und der Reinigungsposition sowie umgekehrt auf besonders bedienungsfreundliche Art und Weise hergestellt werden.

Gemäß einer Ausführungsform weist die Transporteinrichtung ein Dichtelement auf, welches eine Durchführung der Drehlagerung in den Grundkörper abdichtet. Hierdurch wird vermieden, dass Produktreste oder Reinigungsfluid in den Grundkörper bzw. in das Maschinenfundament eindringen können.

Gemäß einer Ausführungsform weist der Grundkörper in der Transportrichtung eine erste äußere Stirnseite auf und eine zweite äußere Stirnseite, welche der ersten äußeren Stirnseite gegenüberliegt. Die Drehlagerungen der benachbarten Transporteinheiten sind an der ersten Stirnseite und/oder der zweiten Stirnseite seitlich am Grundkörper angeordnet. Der Grundkörper kann der Grundkörper der Transporteinrichtung oder der Trennvorrichtung sein.

Gemäß einer Ausführungsform sind an jeder Stirnseite zwei benachbarte Transporteinheiten angeordnet. Dabei erstreckt sich die Transportrichtung vorzugsweise von der zweiten Stirnseite zur ersten Stirnseite.

Die Erfindung ist vorstehend unter Bezugnahme auf eine Transportreinrichtung beschrieben worden. In einem weiteren Aspekt betrifft die Erfindung eine Trennvorrichtung zum Trennen von Portionen aus mit Lebensmittel-Masse befüllten länglichen Hüllen, insbesondere Wurstportionen aus einer Kette von Wurstportionen, mit einer Transporteinrichtung und einem Trennelement, welches dazu eingerichtet ist, miteinander verbundene Wurstportionen einer Wurstkette voneinander zu trennen.

Die Erfindung löst die eingangs bezeichnete Aufgabe in Bezug auf die Trennvorrichtung in dem die Transporteinrichtung nach einem der vorstehenden Ansprüche ausgebildet ist.

Die Trennvorrichtung macht sich die gleichen Vorteile und bevorzugten Ausführungsformen zunutze wie die erfindungsgemäße Transporteinrichtung und umgekehrt. Zur Vermeidung von Wiederholungen wird daher auf das obige Vorbringen verwiesen. Die Verwendung der Transporteinrichtungen bei einer Trennvorrichtung hat sich dabei als besonders vorteilhaft erwiesen. Insgesamt wird erreicht, dass eine Kette aus Wurstportionen sicher dem Trennelement zugeführt wird und darüber hinaus die einzelnen Portionen von dem Trennelement abtransportiert werden, wobei auch im Falle von Kaliberschwankungen oder Formschwankungen ein sicherer Transport sichergestellt ist und wobei die Vorrichtung insgesamt besonders hygienisch ist und leicht zu reinigen.

Gemäß einer Ausführungsform ist die Transporteinrichtung eine erste Transporteinrichtung, wobei die Trennvorrichtung eine zweite Transportvorrichtung nach einem der vorstehenden Ausführungsbeispiele aufweist und wobei die zweite Transporteinrichtung in Transportrichtung der ersten Transporteinrichtung nachgelagert ist, und wobei das Trennelement zwischen der ersten und der zweiten Transporteinrichtung angeordnet ist. Vorzugsweise sind bei einer derartigen Trennvorrichtung jeweils zwei benachbarte Transporteinheiten an jeder Stirnseite des Grundkörpers der Trennvorrichtung angeordnet. Dabei ist der Grundkörper der Transporteinrichtung gleichzeitig der Grundkörper der Trennvorrichtung.

Gemäß eines zweiten Aspekts der Erfindung bzw. gemäß einer vorteilhaften Weiterbildung der Erfindung gemäß dem ersten Aspekts wird erfindungsgemäß in Bezug auf die Trennvorrichtung vorgeschlagen, dass die wenigstens eine Transporteinrichtung mittels wenigstens einer Drehlagerung seitlich an einem Grundkörper der Trennvorrichtung angeordnet ist, wobei das Trennelement direkt mit einem Antriebsmotor gekoppelt ist, welcher benachbart zu den Transportriemen der Transporteinrichtung oberseitig in dem Grundkörper angeordnet ist.

Die Weiterbildung bzw. der zweite Aspekt der Erfindung in Bezug auf die Trennvorrichtung geht von Stand der Technik aus, bei dem zum Vereinzeln von Würstchen ein rotierendes Messer als Trennelement mit mehreren Klingen zum Einsatz kommt. Aufgrund hoher Anforderungen an die Dynamik ist die Trennvorrichtung bzw. das Messer direkt mit einem Antriebsmotor verbunden, d.h. optional unter Zwischenschaltung einer Welle, jedoch ohne weitere Übertragungsmittel, wie Getriebe oder dergleichen. Derartige Trennelemente sind so auszubilden, dass eine möglichst kleine Massenträgheit erzielt wird. Dies ist deshalb erforderlich, da ein solches Trennelement intermittierend betrieben wird, d. h. zum Zwecke eines Schneidvorgangs in Umfangsrichtung gedreht wird, wenn gerade eine Abdrehstelle im Bereich des Trennelementes vorhanden ist.

Bei aus dem Stand der Technik vorbekannten Vorrichtungen befindet sich unterhalb der Transportriemen die entsprechenden Antriebskomponenten bzw. Gehäuselagerungen für die betreffenden Transportriemen. Deshalb ist es im Stand der Technik erforderlich, den Antriebsmotor von diesen mechanischen Komponenten zu beabstanden. Dies hat zur Folge, dass aufgrund der direkten Kopplung des Trennelementes mit dem Antriebsmotor das Trennelement einen entsprechend großen Durchmesser aufweisen muss. Hiermit geht eine hieraus resultierende Massenträgheit des Trennelementes einher, welche im Ergebnis die Trennleistung, d. h. die Trenngeschwindigkeit pro Zeiteinheit begrenzt. Das bedeutet auch, dass der Portionsdurchsatz pro Zeiteinheit limitiert ist.

Durch die Anordnung der Drehlagerung der Transporteinrichtung oder der Transporteinrichtungen seitlich an dem Grundköper auf die hier erfindungsgemäß beschriebene Art, steht nunmehr Bauraum oberseitig innerhalb des Gehäuses zur Verfügung, der dazu genutzt werden kann, den Antriebsmotor aufzunehmen. Da hierdurch auch der Abstand zwischen Drehachse des Trennelements und den Transportriemen bzw. dem entsprechenden Aufnahmeraum für die Wurstportionen bzw. die Wurstkette reduziert wird, kann der Durchmesser des Trennelements verringert werden. Mit anderen Worten ist also der Motor dichter am Transportbereich der Wurstketten angeordnet.

Die Durchmesserreduzierung ermöglicht es, das Trennelement innerhalb kürzerer Zeit zu beschleunigen und abzubremsen, wodurch die Schneidleistung der Trennvorrichtung pro Zeiteinheit erhöht werden kann. Hierdurch wird es möglich, eine Wurstkette der Trennvorrichtung mit höherer Geschwindigkeit zuzuführen und die Wurstkette in Wurstportionen zu vereinzeln. Auch in Bezug auf die Regelung hat sich dies als vorteilhaft erwiesen. Ferner zeichnet sich die Trennvorrichtung aufgrund ihrer verringerten Massenträgheit durch ein vorteilhaftes Überschwingverhalten, ein verbessertes Beschleunigungs- und Abbremsverhalten sowie insgesamt bessere dynamische Eigenschaften aus. Im Übrigen kann die Motorleistung trotz erhöhter Trennleistung aufgrund der geringeren Trägheit des Trennelementes gegenüber aus dem Stand der Technik vorbekannten Lösungen reduziert werden.

Gemäß einer Ausführungsform weist das Trennelement einen Durchmesser quer zu seiner Drehachse von ≤ 200mm auf, insbesondere ≤ 180mm, insbesondere wobei der Durchmesser des Trennelements größer ist als 120mm. Die Verwendung von Trennelementen mit Durchmessern kleiner gleich 200mm wird erstmals dadurch möglich, dass die wesentlichen mechanischen Komponenten zum Betrieb der Transporteinrichtungen nunmehr aus dem Montagebereich des Antriebsmotors verlagert wurden. Ein Mindestdurchmesser größer als 120mm ist erforderlich, um sichere Trennvorgänge realisieren zu können.

Gemäß einer Ausführungsform ist das Trennelement als rotierbares Messer ausgebildet. Vorzugsweise ist das Messer als symmetrisches Messer ausgebildet, welches zwei Klingen aufweist. Die Verwendung eines solchen Messers mit zwei Klingen ist aufgrund der geringeren Trägheit aufgrund des geringeren notwendigen Durchmessers des Messers realisierbar. Für den Fall, dass das Messer symmetrisch ausgebildet ist, können insgesamt zwei Schneiden an den jeweiligen Klingen ausgebildet sein. Auf diese Weise kann der Schneidvorgang in beide Drehrichtungen bewirkt werden. Hierdurch kann ein solches Messer länger in der Produktion bleiben bis ein Nachschärfen erforderlich ist.

Gemäß einer Ausführungsform ist die Klinge derart ausgebildet, dass diese entlang ihrer Längsachse um 180° gedreht montierbar ist. Selbst für den Fall, dass eine feste Drehrichtung für den Schneidvorgang vorgesehen ist, kann durch die Drehung die Standzeit des Messers erhöht werden, da nach dem Abstumpfen der Klingen in einer ersten Montagerichtung das Messer entfernt werden kann, um 180° entlang seiner Längsachse gedreht werden kann, und sodann nach einer entsprechenden Montage die vorgehaltenen scharfen Klingen für die weiteren Trennvorgänge verwendet werden können. Der Antriebsmotor ist vorzugsweise als Servomotor ausgebildet.

Gemäß einer Ausführungsform ist die Drehachse des Antriebsmotors koaxial zu der Drehachse des Trennelements angeordnet. Dies ist aufgrund der hohen dynamischen Anforderungen, die sich unter anderem aus dem intermittierenden Betrieb des Trennelements ergeben, vorzugswürdig. Vorzugsweise wird der Antriebsmotor im sogenannten Taktbetrieb betrieben, d. h. das Trennelement nur dann rotiert, wenn sich eine Trennstelle der Wurstkette im Bereich des Trennelementes befindet.

In einem weiteren Aspekt betrifft die Erfindung darüber hinaus ein Verfahren zum Betreiben einer Transporteinrichtung oder einer Trennvorrichtung nach einem der vorstehenden Ausführungsbeispiele. Erfindungsgemäß weist das Verfahren die Schritte auf: Einstellen eines Ausgangsabstandes zwischen den benachbarten Transportriemen, insbesondere mittels eines Anschlags, wobei der Ausgangsabstand kleiner gewählt ist als der kleinste erwartete Durchmesser der zu transportierenden Portionen oder der Wurstkette, Transportieren der Portionen oder der Wurstkette in einem Aufnahmeraum zwischen den benachbarten Transportriemen. Durch die betreffende Einstellung des Ausgangsabstandes zwischen den benachbarten Transportriemen wird zum einen erreicht, dass eine hinreichend große Kraft zum Transport auf die zu transportierenden Portionen aufgebracht wird, sodass die Transportriemen nicht durchrutschen und letztlich kein Schlupf entsteht und darüber hinaus keine unnötige Belastung der Transportriemenpaare und der mechanischen Komponenten erfolgt, sodass die Lebensdauer dieser Komponenten erhöht wird.

Das Verfahren wird durch die Schritte weitergebildet: Verschwenken der Transporteinheiten um die Drehachse in eine Reinigungsposition, in welcher der Abstand zwischen den benachbarten Transportriemen vergrößert ist, Reinigen der mindestens einer Transporteinrichtung oder der Trennvorrichtung. Auf diese Weise ist der Bereich unter den Transportriemen offen und durchreinigbar. In der Reinigungsposition ist der Zugang zur Unterseite der Transporteinheiten nochmals verbessert. Das Verfahren macht sich im Übrigen die gleichen Vorteile und bevorzugten Ausführungsformen zunutze wie die erfindungsgemäße Transporteinrichtung und die erfindungsgemäße Trennvorrichtung sowie umgekehrt. Zur Vermeidung von Wiederholungen wird auf das obige Vorbringen verwiesen und dieses hier mit einbezogen.

In einem weiteren Aspekt betrifft die Erfindung die Verwendung einer Transporteinrichtung nach einem der vorstehenden Ausführungsbeispiele für eine Trennvorrichtung, insbesondere zum Zuführen und/oder Abführen von Wurstportionen oder einer Wurstkette zu und/oder von einem Trennelement.

Auch die Verwendung macht sich die gleichen Vorteile und bevorzugten Ausführungsformen zunutze wie die erfindungsgemäße Transporteinrichtung, Trennvorrichtung und das erfindungsgemäße Verfahren sowie umgekehrt. Zur Vermeidung von Wiederholungen wird auf das obige Vorbringen verwiesen und dieses hier mit einbezogen.

Weitere Merkmale und Vorteile der Erfindung ergeben sich aus den beigefügten Ansprüchen und der nachfolgenden Beschreibung, in der Ausführungsbeispiele anhand schematischer Zeichnungen im Einzelnen erläutert werden.

Im Einzelnen zeigen:
- Fig. 1: ein Ausführungsbeispiel einer erfindungsgemäßen Trennvorrichtung mit einem Ablagetisch in einer perspektivischen Ansicht;
- Fig. 2a: das Ausführungsbeispiel der Trennvorrichtung gemäß Fig. 1 in einer weiteren perspektivischen Ansicht;
- Fig. 2b: wesentliche Komponenten des Ausführungsbeispiels der erfindungsgemäßen Trennvorrichtung gemäß Fig. 1;
- Fig. 3: das Ausführungsbeispiel der erfindungsgemäßen Trennvorrichtung gemäß den Fig. 1 und 2 mit teilweise geöffneten Gehäuse;
- Fig. 4a, 4b: das Ausführungsbeispiel der erfindungsgemäßen Trennvorrichtung gemäß den Fig. 1 bis 3 in unterschiedlichen Betriebspositionen;
- Fig. 5a-5c: unterschiedliche Betriebspositionen des Ausführungsbeispiels der erfindungsgemäßen Trennvorrichtung gemäß den Fig. 1 bis 4;
- Fig. 6: ein alternatives Ausführungsbeispiel einer erfindungsgemäßen Trennvorrichtung in einer perspektivischen Darstellung;
- Fig. 7a, 7b: das Ausführungsbeispiel der erfindungsgemäßen Trennvorrichtung gemäß Fig. 6 in weiteren perspektivischen Darstellungen; und
- Fig. 8: ein Blockschaltbild eines erfindungsgemäßen Verfahrens.

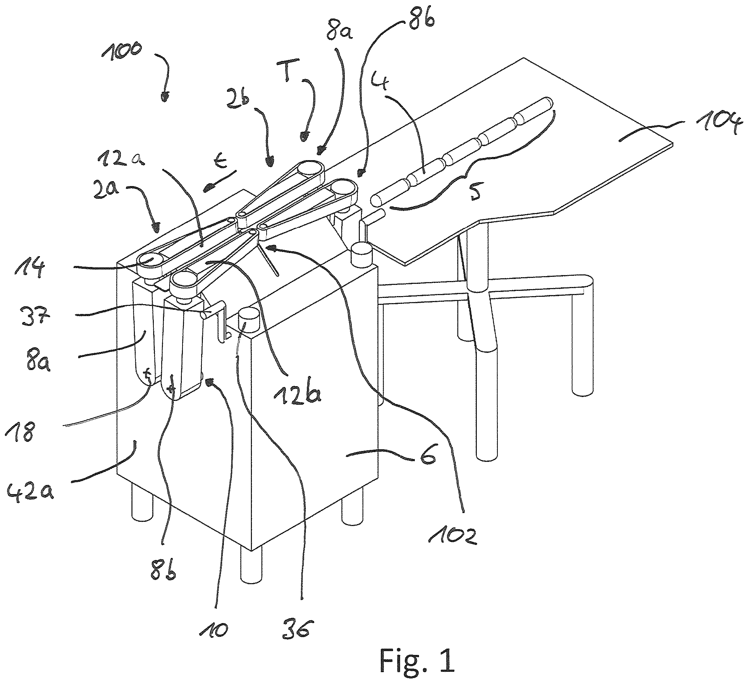

Fig. 1 zeigt eine Trennvorrichtung 100 zum Trennen von Portionen 4 aus mit Lebensmittel-Masse befüllten länglichen Hüllen, insbesondere von Wurstportionen 4 aus einer Kette 5 von Wurstportionen 4. Benachbart zu der Trennvorrichtung 100 ist ein Ablagetisch 104 angeordnet, auf dem eine derartige Kette 5 aus Wurstportionen 4 schematisch dargestellt ist. Die Trennvorrichtung 100 weist eine erste Transporteinrichtung 2a auf und eine zweite Transporteinrichtung 2b. Die zweite Transporteinrichtung 2b ist in einer Transportrichtung t der ersten Transporteinrichtung 2a nachgelagert angeordnet. Die Trennvorrichtung 100 weist ferner ein Trennelement 102 auf. Das Trennelement 102 ist zwischen der ersten und der zweiten Transporteinrichtung 2a, 2b angeordnet.

Die Trennvorrichtung 100 weist einen Grundkörper 6 auf. Der Grundkörper 6 ist gleichzeitig der Grundkörper der Transporteinrichtungen 2a, 2b. Der Grundkörper 6 wird auch als Maschinenfundament 6 bezeichnet und weist insbesondere eine Pyramidenform an seiner Oberseite auf. Jede der Transporteinrichtungen 2a, 2b weist zwei Transporteinheiten 8a, 8b auf. Die Transporteinheiten 8a, 8b sind jeweils über eine Lagerung 10 mit dem Grundkörper verbunden. Die Transporteinheiten 8a, 8b weisen jeweils einen antreibbaren Transportriemen 12a, 12b auf. Die Transportriemen 12a, 12b sind über Antriebsrollen 14 angetrieben. Dabei sind die Transportriemen 12a, 12b der Transporteinheiten 8a, 8b benachbart zueinander derart angeordnet, dass diese zwischen sich einen Aufnahmeraum 16 zur Aufnahme und zum Transport der Portionen 4 bzw. einer Kette 5 aus Wurstportionen 4 in die Transportrichtung t definieren.

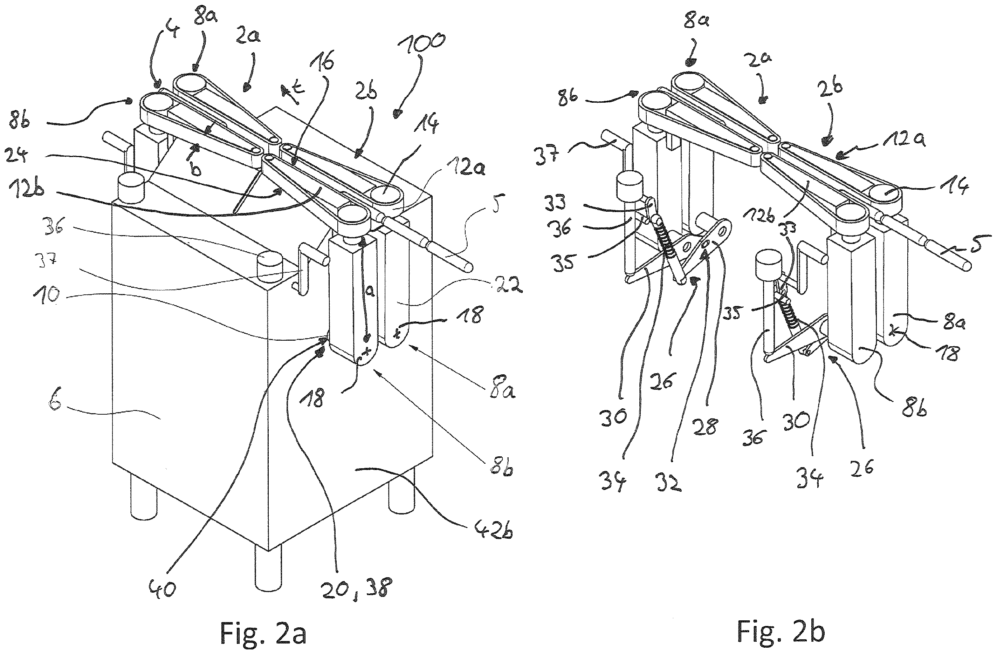

Die Lagerungen 10 der jeweiligen Transporteinrichtungen 2a, 2b sind als Drehlagerungen 10 ausgebildet. Die Drehlagerungen 10 weisen jeweils eine Drehachse 18 auf, um welche die zugehörige Transporteinheit 8a, 8b verschwenkbar gegenüber dem Grundkörper 6 gelagert ist. Die benachbarten Transportriemen 12a, 12b der Transporteinheiten 8a, 8b sind durch das Verschwenken um die Drehachse 18 aufeinander zu und/oder voneinander weg bewegbar. Die Transporteinheiten 8a, 8b der beiden Transporteinrichtungen 2a, 2b sind benachbart zueinander angeordnet. Dabei sind die Drehachsen 18 der benachbarten Transporteinheiten 8a, 8b parallel zueinander angeordnet. Jeder der Transporteinheiten 8a, 8b ist dabei ein Antriebsmotor 20 zugeordnet, wobei der Antriebsmotor insbesondere in den Grundkörper 6 eingebettet ist. Die Transporteinheiten 8a, 8b weisen jeweils einen Armabschnitt 22 auf, wie in Fig. 2a dargestellt ist. Der Armabschnitt 22 beabstandet das jeweilige Transportriemen 12a, 12b von der betreffenden Drehlagerung 10. Der Abstand ist derart gewählt, dass sich trotz der Drehlagerungen ein möglichst geringer Winkelfehler im Bereich der Transportriemen 12a, 12b einstellt. Vorzugsweise beträgt ein Abstand a zwischen der Drehachse 18 der Drehlagerung 10 und einer Unterkante 24 des zugeordneten Transportriemens 12a, 12b dem 2- bis 50-fachen der Breite b des Transportriemens 12a, 12b.

Wie in Fig. 2b gezeigt ist, sind die benachbarten Transporteinheiten 8a, 8b über eine Kopplungseinrichtung 26 miteinander gekoppelt. Der Kopplungseinrichtung 26 ist ein Vorspannmittel 34 zugeordnet, welches in Fig. 2b als Druckfeder ausgebildet ist. Das Vorspannmittel 34 ist dazu eingerichtet, die gekoppelten Transporteinheiten 8a, 8b in Richtung des Aufnahmeraums 16 vorzuspannen. Das Vorspannmittel 34 sorgt dafür, dass die zu transportierenden Wurstportionen 4 mit einer definierten Kraft gegen die Transportriemen 12a, 12b gedrückt und transportiert werden können. Schwankungen der Wurstportionen 4 hinsichtlich Kaliber und Form können somit ausgeglichen und ein schlupffreier Transport kann gewährleitet werden.

Die Kopplungseinrichtung 26 ist derart ausgebildet, dass mit der ersten Transporteinheit 8a ein erster Armabschnitt 28 verbunden ist. Mit der zweiten Transporteinheit 8b ist ein zweiter Armabschnitt 30 verbunden. Über eine Kulissenführung 32 ist der erste Armabschnitt 28 mit dem zweiten Armabschnitt 30 gekoppelt. Wenn, wie in Fig. 2b dargestellt ist, das Vorspannmittel 34 mit dem ersten Armabschnitt 28 gekoppelt ist, dann kann die hierdurch aufgebrachte Vorspannkraft über die Kulissenführung 32 auch auf den zweiten Armabschnitt 30 übertragen werden, welcher mit der zweiten Transporteinheit 8b verbunden ist.

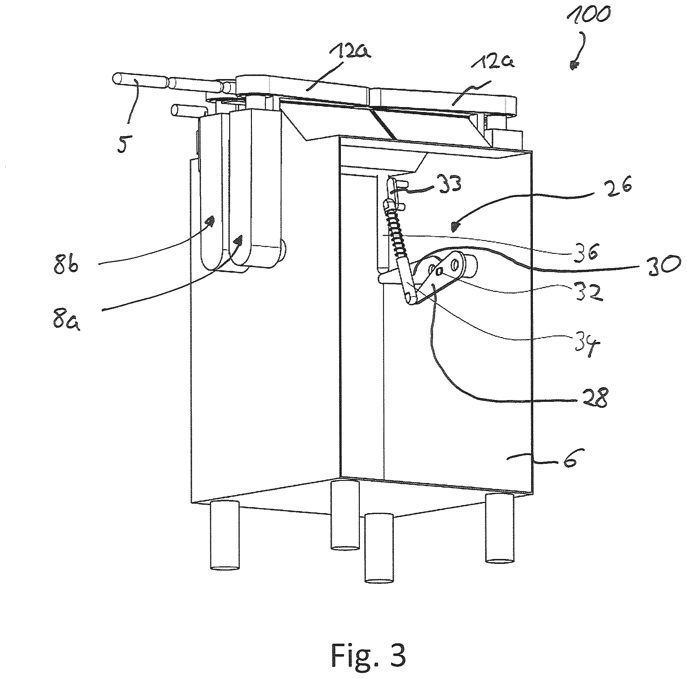

Die Kopplungseinrichtung 26 weist ferner einen verstellbaren Anschlag 36 auf. Der verstellbare Anschlag 36 ist dazu eingerichtet, einen Ausgangsabstand dₐ der Transportriemen 12a, 12b zueinander einzustellen. Hierzu wirkt der verstellbare Anschlag 36 auf den zweiten Armabschnitt 30. In Abhängigkeit einer Vertikalposition eines unteren Endes des verstellbaren Anschlags 36 wird der Ausgangsabstand dₐ der Transportriemen 12a, 12b zueinander eingestellt. Die Einstellung sollte dergestalt erfolgen, dass der Abstand da geringfügig kleiner ist als der kleinste zu erwartende Durchmesser der zu transportierenden Wurstportionen 4. Die Trennvorrichtung 100 weist einen Grundkörper 6 auf. Der Grundkörper 6 weist in der Transportrichtung t eine erste äußere Stirnseite 42a auf und eine zweite äußere Stirnseite 42b, welche der ersten äußeren Stirnseite 42a gegenüberliegt. Die Drehlagerungen 10 der benachbarten Transporteinheiten 8a, 8b sind an der ersten Stirnseite 42a und der zweiten Stirnseite 42b angeordnet. Fig. 3 zeigt die Kopplungseinrichtung 26 aus einer weiteren perspektivischen Ansicht.

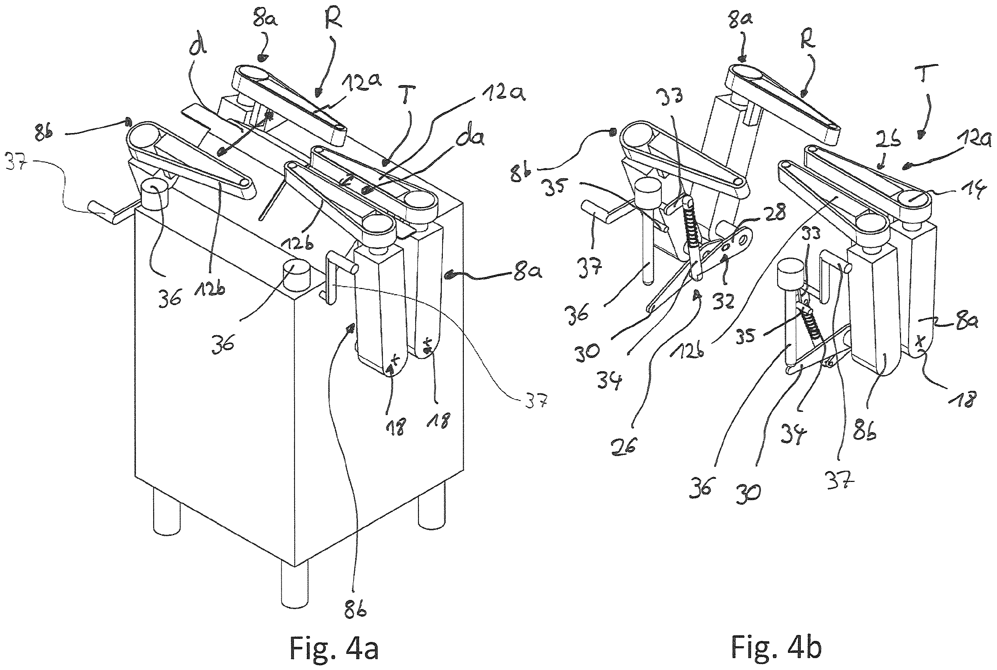

Die Transporteinheiten 8a, 8b sind, wie in den Fig. 4a und 4b gezeigt ist, durch Verschwenken um die Drehachse 18 voneinander weg aus einer Transportposition T, welche in den Fig. 4a und 4b für die zweite Transporteinrichtung 2b gezeigt ist, in eine Reinigungsposition R verschwenkbar. Die Reinigungsposition R ist in Bezug auf die erste Transporteinheit 8a in den Fig. 4a und 4b gezeigt. In der Reinigungsposition R ist ein Abstand d zwischen den benachbarten Transportriemen 12a, 12b vergrößert. Zum Verschwenken zwischen der Reinigungsposition R und der Transportposition T ist eine Kurbel 37 vorgesehen, die auf die Kopplungseinrichtung 26 wirkt. Dies ist in dem in Fig. 4b gezeigten Ausführungsbeispiel derart ausgebildet, dass die Feder 34 über ein Zwischensegment 33 mit der Kurbel 37 verbunden ist. Eine Betätigung der Kurbel 37 wirkt über das Zwischensegment 33 auf die Feder 34 und von dort auf den ersten Armabschnitt 28. Über die Kulissenführung 32 wirkt die Betätigung der Kurbel 37 darüber hinaus auch auf den zweiten Armabschnitt 30, sodass die Betätigung der Kurbel 37 in die in der Fig. 4b mit Bezug auf die erste Transporteinheit 8a gezeigte Stellung zur Folge hat, dass ein Abstand d zwischen den benachbarten Transportriemen 12a, 12b vergrößert ist. Durch Betätigen der Kurbel 37 in der Fig. 4b mit Bezug auf die zweite Transporteinrichtung 2b gezeigte Stellung wird die zweite Transporteinrichtung 2b in die Transportposition T überführt. Hierbei steht das Zwischensegment 33 in Kontakt mit einem Begrenzungspin 35.

Die Transporteinrichtungen weisen ferner jeweils Dichtelemente 38 auf, welche eine Durchführung 40 der Drehlagerung 10 in den Grundkörper 6 abdichten. Hierdurch wird sichergestellt, dass keine Reinigungsfluide oder Produktreste in den Grundkörper 6 eindringen können und gleichzeitig eine möglichst geringe Rotationsträgheit im Bereich der Drehlagerungen 10 sichergestellt ist, sodass sich die Transporteinheiten 8a, 8b auf die beschriebene Weise der Form der zu transportierenden Wurstportionen 4 anpassen können.

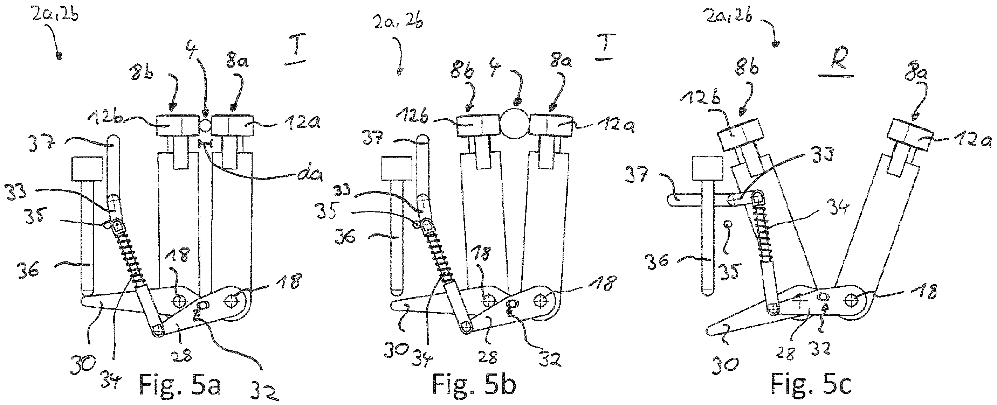

Die Fig. 5a bis 5c veranschaulichen die unterschiedlichen Betriebspositionen der Trennvorrichtung 100 bzw. der Transporteinrichtungen 2a, 2b. In dem in der Fig. 5a gezeigten Zustand ist über den verstellbaren Anschlag 36 ein Ausgangsabstand dₐ der Transportriemen 12a, 12b zueinander eingestellt. Dieser wird insbesondere derart gewählt, dass der Ausgangsabstand dₐ geringfügig kleiner ist als der kleinste zu erwartende Durchmesser der zu transportierenden Wurstportionen 4.

In dem in der Fig. 5b gezeigten Zustand wird nunmehr eine Wurstportion 4 transportiert, die einen größeren Durchmesser aufgrund von Form- und/oder Kaliberschwankungen aufweist. Dies hat zur Folge, dass die Transporteinheiten 8a, 8b gegen eine Federkraft der Feder 34 nach außen ausgelenkt werden, aber dennoch eine hinreichende Kraft zwischen den Transporteinheiten 8a und 8b und der Wurstportion 4 aufbringen, sodass ein sicherer Transport der Wurstportion 4 gewährleistet ist. Gleichzeitig wird vermieden, dass die mechanischen Komponenten der Transporteinheiten 8a und 8b über Gebühr belastet werden oder gar ein Blockieren der Transportriemen 12a, 12b eintritt, was insbesondere dadurch erreicht wird, dass die Transportriemen 12a, 12b nach außen ausweichen können.

In den Fig. 5a und 5b befindet sich die jeweilige Transporteinrichtung 2a, 2b in der Transportposition T. In Fig. 5c befindet sich die Transporteinrichtung 2a, 2b in der Reinigungsposition R. Hierzu ist in Fig. 5c gegenüber den Fig. 5a, 5b die Kurbel 37 verschwenkt und wirkt über das Zwischensegment 33 und die Feder 34 auf den ersten Armabschnitt 28 und von dort über die Kulissenführung 32 auch auf den zweiten Armabschnitt 30, wodurch die Transporteinheiten 8a, 8b kinematisch gekoppelt sind. In der Fig. 5c gezeigten Reinigungsposition R ist der Abstand zwischen den Transportriemen 12a, 12b vergrößert.

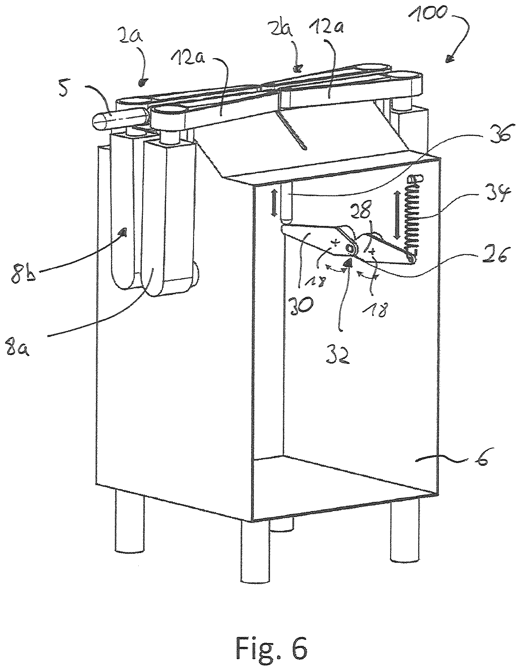

Fig. 6 zeigt ein alternatives Ausführungsbeispiel einer Trennvorrichtung 100. Diese weist in bereits beschriebener Weise zwei Transporteinrichtungen 2a, 2b auf, die analog zu den Transporteinrichtungen 2a, 2b der Fig. 1 bis 5 ausgebildet sind. Allerdings ist die Kopplungseinrichtung 26 abweichend konfiguriert. Mit den jeweiligen Drehachsen 18 der Transporteinheiten 8a, 8b ist jeweils ein Armabschnitt 28, 30 verbunden. Die Armabschnitte 28, 30 sind jedoch in einem Bereich zwischen den Drehachsen 18 über eine Kulissenführung 32 miteinander verbunden. Der verstellbare Anschlag 36 wirkt auf den zweiten Armabschnitt 30. Der erste Armabschnitt 28 ist mit einer Feder 34 mit dem Gehäuse verbunden. Die Feder 34 wirkt hierbei als Zugfeder. Die in den Fig. 1 bis 5 gezeigte Feder 34 wirkt als Druckfeder.

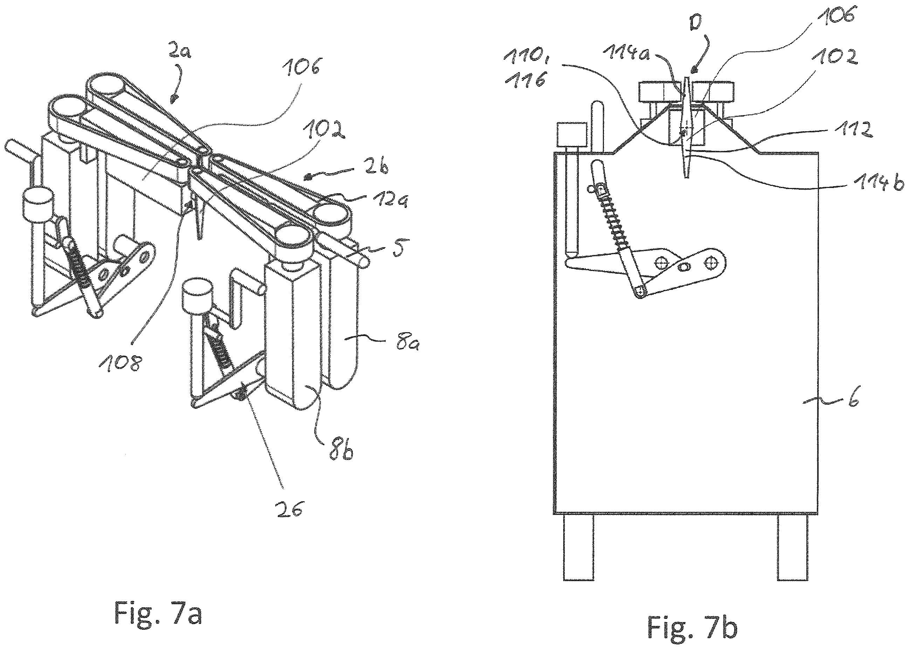

Die Fig. 7a und 7b zeigen die erfindungsgemäße Trennvorrichtung 100. Wie in den Figuren verdeutlicht ist, sind die Transporteinrichtungen 2a, 2b über jeweils zwei Drehlagerungen 10, wie in den übrigen Figuren beschrieben, seitlich an einem in Figur 7b gezeigten Grundkörper 6 der Trennvorrichtung 100 angeordnet. Das Trennelement 102 ist direkt mit einem Antriebsmotor 106 gekoppelt, d. h. in diesem Fall lediglich unter Zwischenschaltung einer kurzen Antriebswelle. Der Antriebsmotor 106 ist benachbart zu den Transportriemen 12a, 12b der Transporteinrichtung 2a oberseitig in dem Grundkörper 6 angeordnet. Wie insbesondere aus Figur 7b zu entnehmen ist, grenzt der Antriebsmotor 106 an die Oberseite des Grundkörpers 6 an und befindet sich damit auch in unmittelbarer Nähe zu den Transportriemen 12a, 12b. Auf diese Weise kann ein Durchmesser D des Trennelements 102 gegenüber aus dem Stand der Technik vorbekannten Lösungen reduziert werden. Insbesondere weist das Trennelement 102 einen Durchmesser D quer zu seiner Drehachse 110 von ≤ 200mm, insbesondere ≤ 180mm, auf. Vorzugsweise ist der Durchmesser D des Trennelements 102 größer als 120 mm. Das Trennelement 102 ist als rotierbares Messer 112 ausgebildet. Das Messer 112 ist insbesondere symmetrisch ausgebildet. Das Messer 112 weist zwei Klingen 114a, 114b auf. Vorzugsweise weist jede der Klingen 114a, 114b zwei Schneiden auf, wobei die eine Schneide in Richtung der Drehrichtung gerichtet ist und eine Schneide in der gegenüberliegenden Richtung. Vorzugsweise kann das symmetrische Messer 112 sowohl in der in Figur 7b dargestellten Position montiert werden, als auch in einer entlang der Längsachse um 180° gedrehten Position, sodass dann die weitere Schneide für den Trennvorgang verwendet wird. Wie dargestellt, ist die Drehachse 116 des Antriebsmotors 106 koaxial zu der Drehachse 110 des Trennelements 102 angeordnet. Eine derartige direkte Verbindung zwischen Trennelement 102 und Antriebsmotor 106, welche lediglich der Zwischenschaltung einer kurzen Antriebswelle bedarf, reduziert weiter die Massenträgheit des Trennelements 102 und verbessert dessen dynamische Eigenschaften. Das Trennelement 102 wird vorzugsweise intermittierend betrieben, d. h. vorzugsweise nur dann wenn eine Wurstkette 5 derart relativ zu dem Trennelement 102 positioniert ist, dass das Trennelement 102 den Verbindungsbereich zwischen zwei Wurstportionen 4 durchtrennen kann. Durch den im Vergleich zum Stand der Technik geringeren Durchmesser D des Trennelements 102 kann eine größere Anzahl von Wurstportionen 4 aus einer Wurstkette 5 in gegebener Zeit abgetrennt werden, da insbesondere das Beschleunigen und Abbremsen des Trennelements 102 aufgrund der geringeren Massenträgheit schneller und dynamischer sowie präziser erfolgen kann.

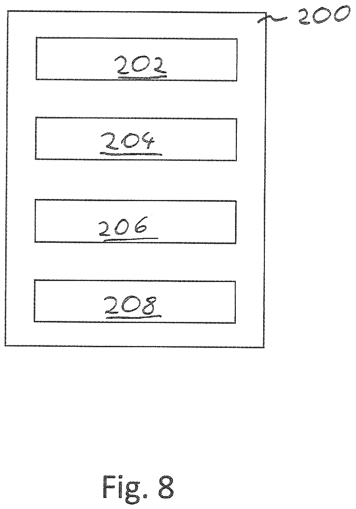

Fig. 8 zeigt schematisch ein Verfahren 200 zum Betreiben einer Transporteinrichtung 2a, 2b oder einer Trennvorrichtung 100. Das Verfahren 200 weist die Schritte auf: Einstellen 202 eines Ausgangsabstandes da zwischen den benachbarten Transportriemen 12a, 12b, insbesondere mittels eines Anschlags 36, wobei der Ausgangsabstand dₐ kleiner gewählt das der kleinste erwartete Durchmesser der zu transportierenden Portionen 4 oder der Wurstkette 5, Transportieren 204 der Portionen 4 oder der Wurstkette 5 in einem Aufnahmeraum 16 zwischen den benachbarten Transportriemen 12a, 12b, Verschwenken 206 der Transporteinheiten 8a, 8b um die Drehachse 18 in eine Reinigungsposition R, in welcher der Abstand zwischen den benachbarten Transportriemen d vergrößert ist, Reinigen 208 der mindestens einen Transporteinrichtung 2a, 2b oder der Trennvorrichtung 100.

### Bezugszeichenliste

- 2a: erste Transporteinrichtung
- 2b: zweite Transporteinrichtung
- 4: Wurstportion
- 5: Wurstkette
- 6: Grundkörper / Maschinenfundament
- 8a: erste Transporteinheit
- 8b: zweite Transporteinheit
- 10: Transporteinheit -Lagerung / Drehlagerung
- 12a: Transportriemen der ersten Transporteinheit
- 12b: Transportriemen der zweiten Transporteinheit
- 14: Antriebsrolle
- 16: Aufnahmeraum
- 18: Drehachse
- 20: Antriebsmotor
- 22: Armabschnitt
- 24: Transportriemenunterkante
- 26: Kopplungseinrichtung
- 28: erster Armabschnitt
- 30: zweiter Armabschnitt
- 32: Kulissenführung
- 33: Zwischensegment
- 34: Vorspannmittel / Feder
- 35: Begrenzungspin
- 36: verstellbarer Anschlag
- 37: Kurbel
- 38: Dichtelement
- 40: Grundkörperdurchführung
- 42a: erste äußere Stirnseite
- 42b: zweite äußere Stirnseite
- 100: Trennvorrichtung
- 102: Trennelement
- 104: Ablagetisch
- 106: Antriebsmotor
- 108: Motorwelle
- 110: Drehachse des Trennelements
- 112: Messer
- 114a: erste Messerklinge
- 114b: zweite Messerklinge
- 116: Drehachse des Antriebsmotors
- 200: Verfahren zum Betreiben einer Transporteinrichtung oder einer Trennvorrichtung
- 202: Einstellen eines Abstandes zwischen den Transportriemen
- 204: Transportieren der Portionen
- 206: Verschwenken der Transporteinheiten in eine Reinigungsposition
- 208: Reinigen der Transporteinrichtung oder der Trennvorrichtung
- a: Abstand zwischen Drehachse und Transportriemen
- t: Transportrichtung
- b: Breite des Transportriemens
- T: Transportposition
- R: Reinigungsposition
- dₐ: Ausgangsabstand benachbarter Transportriemen
- d: Abstand zwischen benachbarten Transportriemen
- D: Durchmesser des Trennelements

## Patentansprüche

1. Transporteinrichtung (2a, 2b) zum Transport von Portionen (4) aus mit Lebensmittel-Masse befüllten länglichen Hüllen, insbesondere Wurstportionen (4) oder einer Kette (5) aus Wurstportionen (4), mit
einem Grundkörper (6), insbesondere einem Maschinenfundament (6),
zwei Transporteinheiten (8a, 8b), wobei die Transporteinheiten (8a, 8b) jeweils über eine Lagerung (10) mit dem Grundkörper (6) verbunden sind, und wobei die Transporteinheiten (8a, 8b) jeweils einen antreibbaren Transportriemen (12a, 12b) aufweisen,
wobei die Transportriemen (12a, 12b) der Transporteinheiten (8a, 8b) benachbart zueinander derart angeordnet sind, dass diese zwischen sich einen Aufnahmeraum (16) zur Aufnahme und zum Transport der Portionen (4) in eine Transportrichtung (t) definieren,
**dadurch gekennzeichnet, dass** wenigstens eine, insbesondere beide Lagerungen (10), als Drehlagerungen (10) ausgebildet sind, wobei die wenigstens eine Drehlagerung (10) eine Drehachse (18) aufweist, um welche die jeweilige Transporteinheit (8a, 8b) verschwenkbar gegenüber dem Grundkörper (6) gelagert ist, wobei die Transportriemen (12a, 12b) der Transporteinheiten (8a, 8b) durch das Verschwenken um die wenigstens eine Drehachse (18) aufeinander zu und/oder voneinander weg bewegbar sind.

2. Transporteinrichtung (2a, 2b) nach Anspruch 1,
wobei die Drehlagerungen (10) seitlich an dem Grundkörper (6) angeordnet sind und/oder wobei die Transporteinheiten (8a, 8b) benachbart zueinander angeordnet sind, insbesondere wobei Drehachsen (18) der benachbarten Transporteinheiten (8a, 8b) parallel zueinander angeordnet sind.

3. Transporteinrichtung (2a, 2b) nach einem der vorstehenden Ansprüche,
wobei die Transporteinheiten (8a, 8b) jeweils einen Armabschnitt (22) aufweisen, welcher den Transportriemen (12a, 12b) von der Drehlagerung (10) beabstandet, insbesondere wobei ein Abstand (a) zwischen der Drehachse (18) der Drehlagerung (10) und einer Unterkante (24) des zugeordneten Transportriemens (12a, 12b) dem 2- bis 50-fachen einer Breite (b) des Transportriemens (12a, 12b) entspricht.

4. Transporteinrichtung (2a, 2b) nach einem der vorstehenden Ansprüche,
wobei die benachbarten Transporteinheiten (8a, 8b) über eine Kopplungseinrichtung (26) miteinander gekoppelt sind, insbesondere wobei der Kopplungseinrichtung (26) ein Vorspannmittel (34) zugeordnet ist, welches dazu eingerichtet ist, die gekoppelten Transporteinheiten (8a, 8b) in Richtung des Aufnahmeraumes (16) vorzuspannen.

5. Transporteinrichtung (2a, 2b) nach Anspruch 4,
wobei die Kopplungseinrichtung (26) einen verstellbaren Anschlag (36) aufweist, welcher dazu eingerichtet ist, einen Ausgangsabstand (dₐ) der Transportriemen (12a, 12b) zueinander einzustellen.

6. Transporteinrichtung (2a, 2b) nach einem der vorstehenden Ansprüche,
wobei die Transporteinheiten (8a, 8b) durch ein Verschwenken um die Drehachse (18) voneinander weg aus einer Transportposition (T) in eine Reinigungsposition (R) verschwenkbar sind, in welcher ein Abstand (d) zwischen den benachbarten Transportriemen (12a, 12b) vergrößert ist, insbesondere wobei zum Verschwenken zwischen der Reinigungsposition (R) und der Transportposition (T) eine Kurbel (37) vorgesehen ist, die auf die Kopplungseinrichtung (26) wirkt.

7. Transporteinrichtung (2a, 2b) nach einem der vorstehenden Ansprüche,
wobei die Transporteinrichtung (2a, 2b) ein Dichtelement (38) aufweist, welches eine Durchführung (40) der Drehlagerung (10) in den Grundkörper (6) abdichtet,
und/oder wobei der Grundkörper (6) in der Transportrichtung (t) eine erste äußere Stirnseite (42a) aufweist und eine zweite äußere Stirnseite (42b), welche der ersten äußeren Stirnseite (42a) gegenüberliegt, und wobei die Drehlagerungen (10) der benachbarten Transporteinheiten (8a, 8b) an der ersten Stirnseite (42a) und/oder der zweiten Stirnseite (42b) seitlich am Grundkörper (6) angeordnet sind.

8. Trennvorrichtung (100) zum Trennen von Portionen (4) aus mit Lebensmittel-Masse befüllten länglichen Hüllen, insbesondere Wurstportionen (4) aus einer Kette (5) von Wurstportionen (4),
mit einer Transporteinrichtung (2a, 2b) und einem Trennelement (102), welches dazu eingerichtet ist, miteinander verbundene Wurstportionen (4) einer Wurstkette (5) voneinander zu trennen,
**dadurch gekennzeichnet, dass** die Transporteinrichtung (2a, 2b) nach einem der vorstehenden Ansprüche ausgebildet ist.

9. Trennvorrichtung (100) nach Anspruch 8,
wobei die Transporteinrichtung (2a, 2b) eine erste Transporteinrichtung (2a) ist und wobei die Trennvorrichtung (100) eine zweite Transporteinrichtung (2b) nach einem der vorstehenden Ansprüche aufweist, wobei die zweite Transporteinrichtung (2b) in Transportrichtung (t) der ersten Transporteinrichtung (2a) nachgelagert ist und wobei das Trennelement (102) zwischen der ersten und der zweiten Transporteinrichtung (2a, 2b) angeordnet ist.

10. Trennvorrichtung (100) nach dem Oberbegriff des Anspruchs 8 oder nach einem der Ansprüche 8 oder 9,
wobei die Transporteinrichtung (2a, 2b) mittels wenigstens einer Drehlagerung (10) seitlich an einem Grundkörper (6) der Trennvorrichtung (100) angeordnet ist,
und wobei das Trennelement (102) direkt mit einem Antriebsmotor (106) gekoppelt ist, welcher benachbart zu den Transportriemen (12a, 12b) der Transporteinrichtungen (2a, 2b) oberseitig in dem Grundkörper (6) angeordnet ist.

11. Trennvorrichtung (100) nach Anspruch 10,
wobei das Trennelement (102) einen Durchmesser (D) quer zu seiner Drehachse (110) von ≤ 200 mm aufweist, insbesondere ≤ 180 mm, insbesondere wobei der Durchmesser (D) des Trennelements (102) größer ist als 120 mm.

12. Trennvorrichtung (100) nach Anspruch 10 oder 11,
wobei das Trennelement (102) als rotierbares Messer (112) ausgebildet ist, insbesondere als symmetrisches Messer (112), welches zwei Klingen (114a, 114b) aufweist,
und/oder wobei eine Drehachse (116) des Antriebsmotors (106) koaxial zu der Drehachse (110) des Trennelements (102) angeordnet ist.

13. Verfahren (200) zum Betreiben einer Transporteinrichtung (2a, 2b) oder einer Trennvorrichtung (100) nach einem der vorstehenden Ansprüche mit den Schritten:
- Einstellen (202) eines Ausgangsabstandes (da) zwischen den benachbarten Transportriemen (12a, 12b), insbesondere mittels eines Anschlags (36), wobei der Ausgangsabstand (dₐ) kleiner gewählt ist als der kleinste erwartete Durchmesser der zu transportierenden Portionen (4) oder der Wurstkette (5),
- Transportieren (204) der Portionen (4) oder der Wurstkette (5) in einem Aufnahmeraum (16) zwischen den benachbarten Transportriemen (12a, 12b).

14. Verfahren (200) nach Anspruch 13, wobei das Verfahren (200) weiterhin die Schritte aufweist:
- Verschwenken (206) der Transporteinheiten (8a, 8b) um die Drehachse (18) in eine Reinigungsposition (R), in welcher der Abstand zwischen den benachbarten Transportriemen (d) vergrößert ist,
- Reinigen (208) der mindestens einen Transporteinrichtung (2a, 2b) oder der Trennvorrichtung (100).

15. Verwendung einer Transporteinrichtung (2a, 2b) nach einem der vorstehenden Ansprüche für eine Trennvorrichtung (100), insbesondere zum Zuführen und/oder Abführen von Wurstportionen (4) oder einer Wurstkette (5) zu und/oder von einem Trennelement (102).
